# EUROPEAN PATENT SPECIFICATION

(11) **EP 1 161 079 B1**
(45) Date of publication and mention of the grant of the patent: **11.03.2009**
(21) Application number: 01304834.3
(22) Date of filing: 01.06.2001
(51) Int. Cl.: H04N 1/21, H04N 1/00

(54) **Image print order system using network, digital image data recording medium, and providing method thereof**
Bilddruckanfragesystem für Netzwerk, Bilddatenaufnahmemedium und Verfahren dazu
Système de commande d'imprimerie d'images, support pour sauvetage de données d'images numériques et méthode correspondante

(30) Priority: 02.06.2000 JP 2000165999
(43) Date of publication of application: 05.12.2001
(73) Proprietor: FUJIFILM Corporation, Minato-ku Tokyo (JP)
(72) Inventor: Kurokawa, Toru, c/o Fuji Photo Film Co., Ltd., Minato-ku, Tokyo (JP); Fukada, Shigekazu, c/o Fuji Photo Film Co., Ltd., Minato-ku, Tokyo (JP); Yamashita, Yojiro, c/o Fuji Photo Film Co., Ltd., Minato-ku, Tokyo (JP)
(74) Representative: Tothill, John Paul

(56) References cited:
- EP-A- 0 856 972
- EP-A- 0 905 563
- US-A- 5 926 116
- US-A- 6 017 157

## Description

The present invention relates to an image print order system using a network, a recording medium on which digital image data have been recorded, and a recording medium providing method. Particularly, it relates to an order system that can specify a receiver of an order readily when an image print is ordered using a network, a recording medium fit for such an order, and a method for providing such a recording medium.

By the quick spread of a digital camera in addition to the spread and multimedia processing of a personal computer, the environment where digital photographic image can be handled in home is being created. Correspondingly, the convenience of additional application (image processing, editing, arrangement, saving, image mail communication, commonage by network, and the like) by digitization of a photographic image is recognized, so that a service of digitizing an image obtained by a silver bromide film (image of a negative film, a reversal film, or a photographic print) is also provided.

EP 08 56 972, EP- 0905563 and US - 6017157 an disclose a network photograph service system which provides a variety of services relating to a photograph to a customer

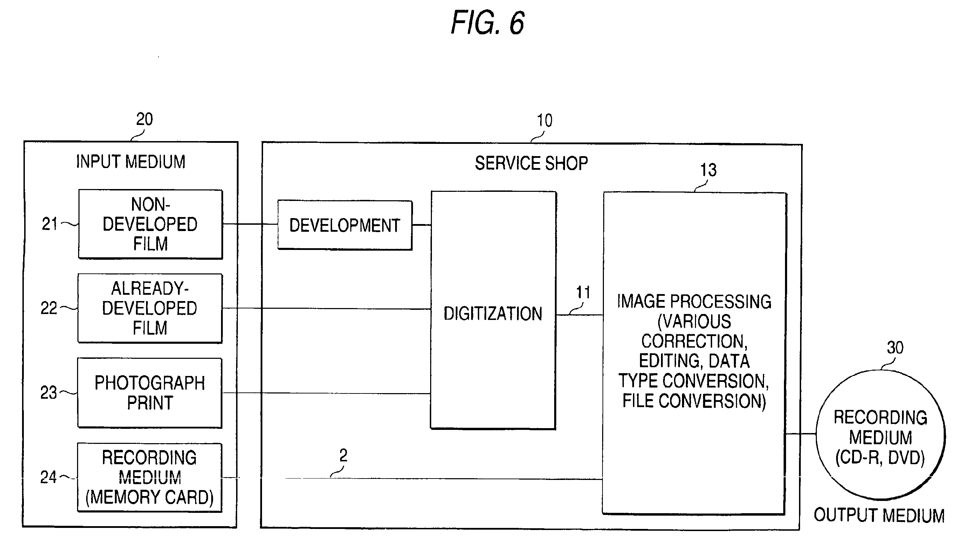

A summary of a service of digitizing an image will be described with reference to Fig. 6. A service shop 10 performs a service of keeping various kinds of input mediums 20 on which images have been recorded and providing an output medium 30 on which digital image data have been recorded. The input mediums are non-developed film 21, an already-developed film 22, a photographic print 23, a recording medium for digital camera (memory card) 24, and the like. The non-developed film 21, after developing, is digitized by a scanner or the like, and the already-developed film 22 and the photographic print 23 are intactly digitized by the scanner or the like. These digital data 11 and digital data of the memory card 12 are subjected to the necessary image processing 13 (various correction, conversion of data type, file conversion, and the like), and recorded on a CD-R, a DVD, or the like as an output medium 30. At this time, a viewer program of the image may be additionally recorded. The service shop 10 may perform all these processing, may request a part (development or the like) or all of the processing to another service shop to perform only a part by itself, or may only act as an agency.

The thus provided recording medium is utilized and kept by a user. In case that he would like to print the recorded photographic image, it was necessary for him to bring the recording medium into the service shop for print service and to request print (to print the photographic image by himself in case that an automatic printing machine is set in the shop).

Further, though print service through a network is also performed, setting of an order server, a print receiving method, setting of a receiving shop, and the like were not easy.

An object of the invention is to provide an image print order system in which a print order can be easily performed using a network. Another object is to provide a recording medium in which a print order can be easily performed and a providing method of the recording medium.

In order to solve the above problems, according to an aspect of the present invention there is provided an image print order system as claimed in claim 1. According to another aspect of the present invention there is provided a recording medium as claimed in claim 10. According to another aspect of the present invention there is provided a recording medium providing method for providing a recording medium as claimed in claim 16.

A preferred embodiment comprises a recording medium on which digital image data have been recorded, data for automatically connecting to an order receiving server when the recording medium is mounted to a terminal and designated print-order acceptant information are previously recorded.

Further, as the designated print-order acceptant information, data for specifying a request receiver to whom creation of the recording medium is requested is preferably previously recorded.

A preferred embodiment of the present invention will now be described by way of example only and with reference to the accompanying drawings, in which:
Fig. 1 is a diagram showing the schematic constitution of an image print order system of a preferred embodiment of the present invention.
Fig. 2 is a flowchart of the print order.
Fig. 3 is a diagram showing an example of a displayed page in the case that the order cannot be received.
Fig. 4 is a diagram showing an example of a displayed page of a print order receiving shop list
Fig. 5 is a diagram showing an example of a displayed order-receiving page.
Fig. 6 is a diagram showing a summary of image digitizing service.

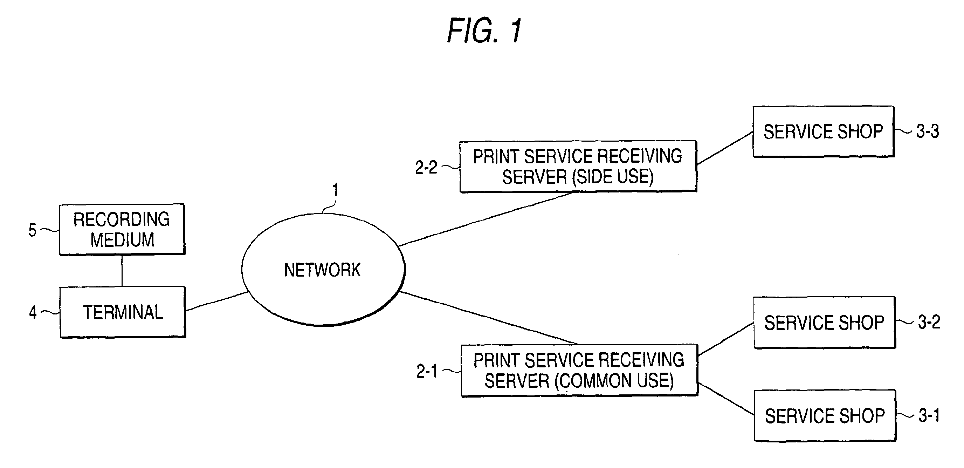

A preferred mode for carrying out the invention will be described below with reference to Figs. 1 to 6.

Fig. 1 is a diagram showing a schematic constitution of an image print order system according to a preferred embodiment of the present invention.

To a network 1 such as an Internet or the like, print service receiving servers 2-1 and 2-2 are connected. In case that a user requires print of digital image data recorded on a recording medium 5, he mounts the recording medium 5 to a terminal 4. Connection address data to a specified server and data indicating a specified service shop where print is ordered have been recorded on the recording medium 5. Now, assuming that data indicating the print service receiving server 2-1 and a service shop 3-1 has been recorded, the terminal 4 connects through the network 1 to the print service receiving server 2-1 and transmits print request data (requested service shop data, requester, the requested number of prints, and the like) together with digital image data to be printed. The server 2-1 transmits the reception data to the service shop 3-1. In case that the service shop 3-1 is simply an agency, the server 2-1 transmits the reception data to another service shop (not shown) to request print and delivery to the service shop 3-1, and it transmits reception of the print order to the service shop 3-1. The user who has requested the print can get the photographic print at the service shop 3-1 after a predetermined time.

Next, a recording medium providing method of the invention, the constitution of the recording medium, and a print ordering method will be described in detail. In the following description, the recording medium 5 is taken as a CD-R and the print service-receiving servers 2-1, 2-2 are taken as WWW (World Wide Web) servers.

The print service-receiving server 2-1 has a print order receiving WWW page for each of the plural service shops 3-1, 3-2, and the print service-receiving server 2-2 has a print order receiving WWW page for the service shop 3-3. A chain store and a small-scale independent service shop are suited to a mode of the print service receiving server 2-1 and the plural service shops 3-1, 3-2. In case that the independent service shop can hold an independent server, it is suited to a mode of the print service receiving server 2-2 and the service shop 3-3. In case that the user brings a non-developed film into the service shop 3-1 to request development processing and recording to a CD-R, similarly to the conventional example, the service shop 3-1 performs the development processing, digitization processing, and image processing, using equipments in its shop or external equipments, and records on the CD-R digital image data and a thumbnail image as an index of the recorded images. At this time, on the CD-R, a URL of a print order receiving WWW page of its own shop, an automatic run program, and a to-network connection processing program operated by the automatic run program are recorded together with the image data. Additionally, a viewer program of image, an order receiving data creating program, user's name and telephone number, and the like may be recorded.

When the user mounts the CD-R received from the service shop 3-1 to the terminal 4, a picture for selecting image display by a viewer program (which may be what has been recorded on the CD-R or what has been previously recorded in the terminal) or print order is displayed by the automatic run program.

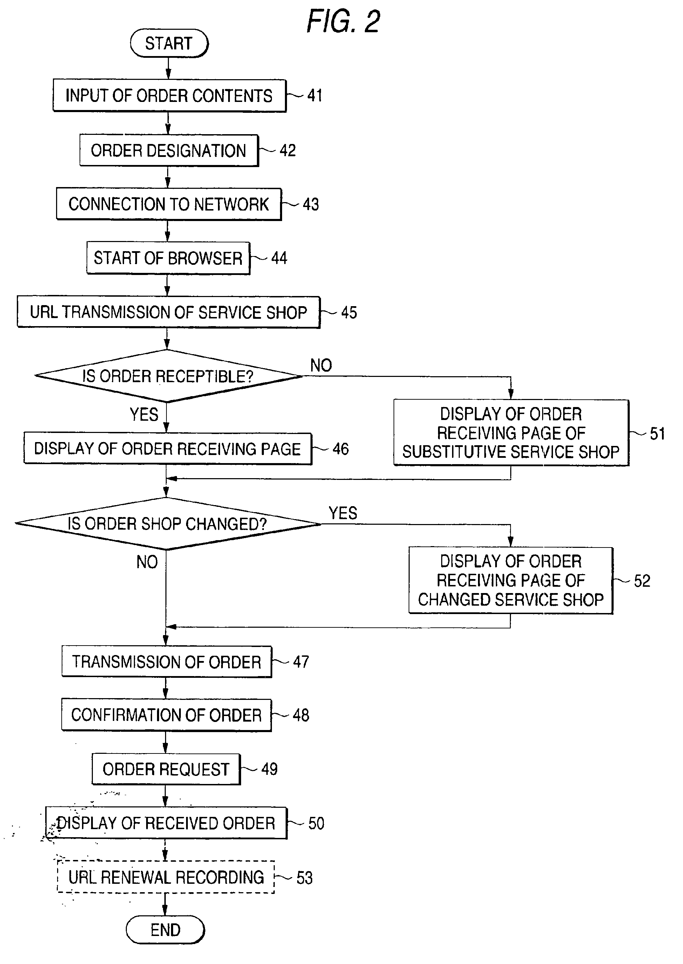

A flowchart in case that the print order is selected is shown in Fig. 2. In case that the print order is selected, the process proceeds to an input processing of the order contents (step 41). The input processing of the order contents comprises input of an image to be printed, input of print condition (print size, the number of prints, special processing and the like), input of order requester's name and telephone number, selection of a paying method, and the like.

The image to be printed can be input readily by displaying the thumbnail image of the images recorded on the CD-R and selecting the necessary image. In case that the user requests print of other images than the images recorded on the CD-R, image data of another memory to which the terminal can access is selected. The print condition is also input similarly.

Though order requester's name and telephone number may be input at the ordering time, they may be previously input at the creating time of the CD-R to be utilized. The paying method may be also input similarly. A program for these input processing may be previously recorded on the CD-R or may be recorded in the terminal.

When the input of the order contents is completed, a button on the screen is clicked thereby to input order instruction (step 42). By this instruction, connection processing to the network is performed (step 43). In case that the terminal connects to the network by dial-up connection, a connection program (which is usually installed in the terminal) is started, the terminal connects to an access point by a telephone circuit or an ISDN circuit, and a user ID and a password are input to perform connection. The telephone number of the access point, the user ID and the password, in case that the terminal is a private terminal of the user such as a family personal computer, may be previously stored in the terminal.

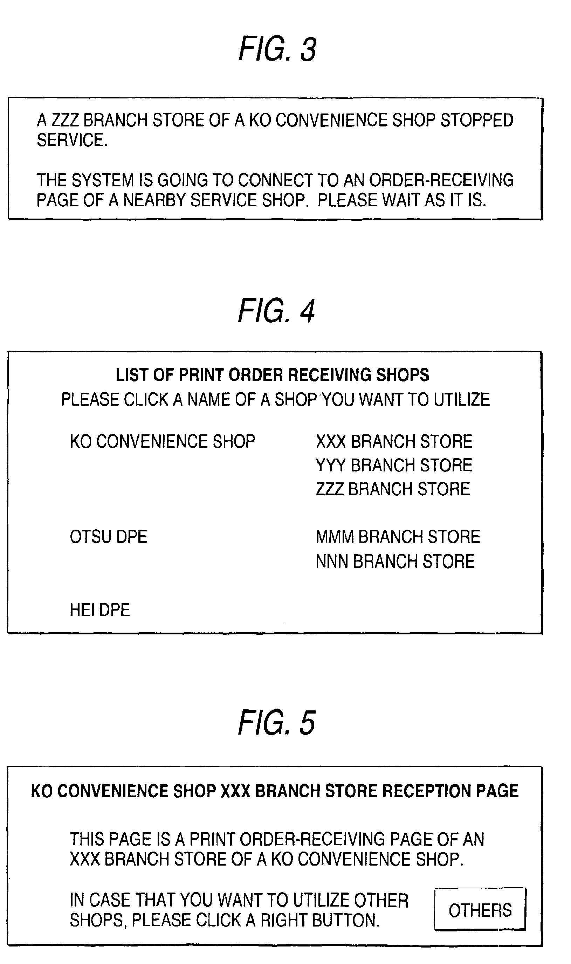

Next, a browser program of the terminal is started (step 44), a URL of an order inputting WWW page of the service shop 3-1 is transmitted (step 45), and an order receiving page is obtained and displayed (step 46). In case that the service shop cannot receive the order since it is closed or is under refit, a page as shown in Fig. 3 is displayed and thereafter an order receiving page of a substitute service shop is displayed (step 51). As a substitute service shop, a nearby service shop is previously set. And, the already-input order contents are transmitted as order data (step 47).

In case that the user wants to receive the print from another service shop than the service shop 3-1, a print order receiving shop list page as shown in Fig. 4 is displayed. After an order receiving page of another service shop was obtained and displayed (step 52), the already-input order contents are transmitted as order data (step 47). The order-receiving page includes a button for utilizing another shop as shown in Fig. 5. By clicking this button, page data shown in Fig. 4 can be obtained.

In this example, after the connection to the network, the browser is started. However, before the connection to the network, the browser may be started. Further, after input of the order contents, the connection to the network is performed. However, the connection to the network may be firstly performed and thereafter the order contents may be input on the order-receiving page. In this case, an order content input processing program can be supplied from the server. Further, in case that the service shop 3-1 cannot receive the order, instead of displaying the order receiving page of the substitute service shop, this system may display the page of the print order receiving shop list as shown in Fig. 4 to select the service shop that receives the order.

When the order data is transmitted to the server 2-1, a calculation of an amount of money according to the print processing contents, a service shop that receives the print, a receptible data, and the like are displayed and their confirmation is demanded (step 48). In case that there are no errors, the user clicks the button on the screen to input an order request (step 49).

When the order request is transmitted to the server 2-1 (another server in case that another receiving shop is designated), a signal indicating the reception of the order request is transmitted from the server 2-1 and displayed on the terminal (step 50). In this displayed picture, a reception number and the like are included as display data. This data is printed out or the reception number is written down thereby to use this data for the order reception in the service shop 2-1.

In case that another reception shop is designated, the URL recorded on the recording medium 5 may be rewritten (step 53)

As clear from the above description, according to the preferred embodiments of the present invention, connection to the network order server can be automatically performed, and a service shop at which recording medium creation was requested is automatically selected as a service shop to which print is requested. Therefore, an order using a network can be performed lightheartedly and readily

## Claims

1. An image print order system using a network, comprising:
an order receiving server (2-1; 2-2) which is connected to said network (1); and
a terminal unit (4) connectable to said network (1), to which a recording medium (5) can be mounted; **characterised in that**:
said recording medium (5) stores a digital image data, a server-connection address information, and a designated print-order acceptant information;
said terminal unit (4) has connecting means and transmitting means, which allow said terminal unit (4), when said recording medium. (5) is mounted to the terminal unit (4), to connect to said order receiving server (2 -1; 2-2) based on said server-connection address information, and to transmit to said order receiving server (2-1; 2-2) said designated print-order acceptant information and at least a part of said digital image data; and
said order receiving server (2-1; 2-2) has data outputting means, which allows said order receiving server (2-1; 2-2) to output a print command data based on the received digital image data, and to output a command data by which an acceptant of an order in accordance with said designated print-order acceptant information can receive an image print that is printed based on said print command data.

2. An image print order system according to Claim 1, wherein said order receiving server (2-1; 2-2) is a WWW server.

3. An image print order system according to Claim 2, wherein said recording medium (5) stores said server-connection address information and designated print-order acceptant information as URL data for specifying a WWW page created for each receiver of the order, and
said transmitting means allows said terminal unit (4), after acquiring the data of the WWW page for each of said specified receivers of the order, to transmit said digital image data to said WWW server.

4. An image print order system according to Claim 3, wherein the data of the WWW page for each of said specified receivers of the order includes data for acquiring data of a WWW page of another receiver than the receiver of the order according to said designated print-order acceptant information.

5. An image print order system according to Claim 3, wherein said connecting means allows said terminal unit (4), when the receiver of the order according to said designated print-order acceptant information cannot receive the order, to obtain a WWW page of a substitutive receiver of the order or a WWW page including order-receivable-receiver data.

6. An image print order system according to any one of Claims 1 to 5, wherein said data outputting means allows said order receiving server (2 -1; 2-2), when the receiver of the order according to said designated print-order acceptant information cannot receive the order, or by selection of an order requester, to output command data for making it possible that another receiver, other than the receiver of the order according to said designated print-order acceptant information receives said image print.

7. An image print order system according to any one of Claims 1 to 6, wherein said server-connection address information and designated print-order acceptant information are recorded when the digital image data is recorded in said recording medium (5).

8. An image print order system according to any one of Claims 1 to 7, wherein said designated print-order acceptant information is data that specifies a receiver of request to whom creation of said recording medium (5) has been requested.

9. An image print order system according to any one of Claims 1 to 8, wherein said server-connection address information and said designated print-order acceptant information are renewable.

10. A recording medium on which digital image data has been recorded, which can be mounted to a terminal unit (4) connectable to a network (1), and which stores therein connection address data to an order receiving server connected to said network (1), designated print-order acceptant information, and data for causing said terminal unit (4) to connect to said order receiving server (2-1; 2-2) through said network (1) when the recording medium (5) is mounted to said terminal unit (4) and to transmit said designated print-order acceptant information and at least part of said digital image data to said order receiving server (2-1; 2-2).

11. A recording medium according to Claim 10, wherein said order receiving server (2-1; 2-2) is a WWW server.

12. A recording medium according to Claim 11, wherein said server-connection address information and designated print-order acceptant information are URL data for specifying a WWW page created for each receiver of the order.

13. A recording medium according to any one of Claims 10 to 12, wherein said server-connection address information and designated print-order acceptant information are recorded when the digital image data is recorded in said recording medium (5).

14. A recording medium according to any one of Claims 10 to 13, wherein said designated print-order acceptant information is data that specifies a receiver of request to whom creation of said recording medium (5) has been requested.

15. A recording medium according to any one of Claims 10 to 14, wherein said server-connection address information and said designated print-order acceptant information are renewable.

16. A recording medium providing method for providing a recording medium on which digital image data has been recorded;
wherein at least one of said digital image data is obtained by developing a photographic film before development (21) and carrying out a photoelectrical conversion of the image after development, digital image data obtained by carrying out a photoelectrical conversion of the photographic film after development (22) or an image of an image print (23), and digital image data recorded on other recording mediums (24) is recorded on a single recording medium (5); and
there is included a step of recording connection address data to an order receiving server (2-1; 2-2) connected to a network (1), designated print-order acceptant information, and data for causing a terminal unit (4) to connect to said order receiving server (2-1; 2-2) through said network (1) when the recording medium (5) is mounted to the terminal unit (4) and to transmit said designated print-order acceptant information and at least part of said digital image data to said order receiving server (2-1; 2-2).

17. A recording medium providing method according to Claim 16, wherein said order receiving server (2-1; 2-2) is a WWW server.

18. A recording medium providing method according to Claim 17, wherein said server-connection address information and designated print-order acceptant information are recorded on said recording medium (5) as URL data for specifying a WWW page created for each receiver.

19. A recording medium providing method according to any one of Claims 16 to 18, wherein said designated print-order acceptant information is data that specifies a provider to whom provision of said recording medium (5) has been requested.

## Patentansprüche

1. Bilddruck-Bestellsystem unter Verwendung eines Netzwerks, welches System folgendes aufweist:
einen Bestellungs-Empfangsserver (2-1; 2-2), der mit dem Netzwerk (1) verbunden ist; und
eine mit dem Netzwerkwerk (1) verbindbare Endgeräteeinheit (4), an der ein Aufzeichnungsmedium (5) angebracht werden kann; **dadurch gekennzeichnet, dass**:
das Aufzeichnungsmedium (5) digitale Bilddaten, Adresseninformation für eine Server-Verbindung und Annehmerinformation für eine bestimmte Druckbestellung speichert;
die Endgeräteeinheit (4) eine Verbindungseinrichtung und eine Sendeeinrichtung hat, die zulassen, dass die Endgeräteeinheit (4) dann, wenn das Aufzeichnungsmedium (5) an der Endgeräteeinheit (4) angebracht ist, sich basierend auf der Adresseninformation für eine Server-Verbindung mit dem Bestellungs-Empfangsserver (2-1; 2-2) verbindet und die Annehmerinformation für eine bestimmte Druckbestellung und wenigstens einen Teil der digitalen Bilddaten zu dem Bestellungs-Empfangsserver (2-1; 2-2) sendet; und
der Bestellungs-Empfangsserver (2-1; 2-2) eine Datenausgabeeinrichtung hat, die zulässt, dass der Bestellungs-Empfangsserver (2-1; 2-2) Druckbefehlsdaten basierend auf den empfangenen digitalen Bilddaten ausgibt und Befehlsdaten ausgibt, durch die ein Annehmer einer Bestellung gemäß der Annehmerinformation für eine bestimmte Druckbestellung einen Bilddruck empfangen kann, der basierend auf den Druckbefehlsdaten gedruckt ist.

2. Bilddruck-Bestellsystem nach Anspruch 1, wobei der Bestellungs-Empfangsserver (2-1; 2-2) ein WWW-Server ist.

3. Bilddruck-Bestellsystem nach Anspruch 2, wobei das Aufzeichnungsmedium (5) die Adresseninformation für eine Server-Verbindung und die Annehmerinformation für eine bestimmte Druckbestellung als URL-Daten zum Spezifizieren einer für jeden Empfänger der Bestellung erzeugten WWW-Seite speichert; und
die Sendeeinrichtung zulässt, dass die Endgeräteeinheit (4), nach einem Erlangen der Daten der WWW-Seite für jeden der spezifizierten Empfänger der Bestellung, die digitalen Bilddaten zu dem WWW-Server sendet.

4. Bilddruck-Bestellsystem nach Anspruch 3, wobei die Daten der WWW-Seite für jeden der spezifizierten Empfänger der Bestellung Daten zum Erlangen von Daten einer WWW-Seite eines anderen Empfängers als des Empfängers der Bestellung gemäß der Annehmerinformation für eine bestimmte Druckbestellung enthalten.

5. Bilddruck-Bestellsystem nach Anspruch 3, wobei die Verbindungseinrichtung zulässt, dass die Endgeräteeinheit (4) dann, wenn der Empfänger der Bestellung gemäß der Annehmerinformation für eine bestimmte Druckbestellung die Bestellung nicht empfangen kann, eine WWW-Seite eines Ersatz-Empfängers der Bestellung oder eine WWW-Seite mit Daten für einen eine Bestellung empfangbaren Empfänger erhält.

6. Bilddruck-Bestellsystem nach einem der Ansprüche 1 bis 5, wobei die Datenausgabeeinrichtung zulässt, dass der Bestellungs-Empfangsserver (2-1; 2-2) dann, wenn der Empfänger der Bestellung gemäß der Annehmerinformation für eine bestimmte Druckbestellung die Bestellung nicht empfangen kann, oder durch Auswahl eines Bestellungs-Anforderers, Befehlsdaten zum Ermöglichen, dass ein anderer Empfänger, der ein anderer als der Empfänger der Bestellung gemäß der Annehmerinformation für eine bestimmte Druckbestellung ist, den Bilddruck empfängt, ausgibt.

7. Bilddruck-Bestellsystem nach einem der Ansprüche 1 bis 6, wobei die Adresseninformation für eine Server-Verbindung und die Annehmerinformation für eine bestimmte Druckbestellung aufgezeichnet werden, wenn die digitalen Daten in dem Aufzeichnungsmedium (5) aufgezeichnet werden.

8. Bilddruck-Bestellsystem nach einem der Ansprüche 1 bis 7, wobei die Annehmerinformation für eine bestimmte Druckbestellung Daten sind, die einen Empfänger einer Anforderung spezifizieren, zu dem eine Erzeugung des Aufzeichnungsmediums (5) angefordert worden ist.

9. Bilddruck-Bestellsystem nach einem der Ansprüche 1 bis 8, wobei die Adresseninformation für eine Server-Verbindung und die Annehmerinformation für eine bestimmte Druckbestellung erneuerbar sind.

10. Aufzeichnungsmedium, auf dem digitale Bilddaten aufgezeichnet worden sind, das an einer mit einem Netzwerk (1) verbindbaren Endgeräteeinheit (4) angebracht werden kann und das darin Verbindungs-Adressendaten zu einem mit dem Netzwerk (1) verbundenen Bestellungs-Empfangsserver (2-1; 2-2), Annehmerinformation für eine bestimmte Druckbestellung und Daten zum Veranlassen, dass die Endgeräteeinheit (4) sich über das Netzwerk (1) mit dem Bestellungs-Empfangsserver (2-1; 2-2) verbindet, wenn das Aufzeichnungsmedium (5) an der Endgeräteeinheit (4) angebracht ist, und die Annehmerinformation für eine bestimmte Druckbestellung und wenigstens einen Teil der digitalen Bilddaten zu dem Bestellungs-Empfangsserver (2-1; 2-2) sendet, speichert.

11. Aufzeichnungsmedium nach Anspruch 10, wobei der Bestellungs-Empfangsserver (2-1; 2-2) ein WWW-Server ist.

12. Aufzeichnungsmedium nach Anspruch 11, wobei die Adresseninformation für eine Server-Verbindung und die Annehmerinformation für eine bestimmte Druckbestellung URL-Daten zum Spezifizieren einer für jeden Empfänger der Bestellung erzeugten WWW-Seite sind.

13. Aufzeichnungsmedium nach einem der Ansprüche 10 bis 12, wobei die Adresseninformation für eine Server-Verbindung und die Annehmerinformation für eine bestimmte Druckbestellung aufgezeichnet werden, wenn die digitalen Bilddaten in dem Aufzeichnungsmedium (5) aufgezeichnet werden.

14. Aufzeichnungsmedium nach einem der Ansprüche 10 bis 13, wobei die Annehmerinformation für eine bestimmte Druckbestellung Daten sind, die einen Empfänger einer Anforderung spezifizieren, zu dem eine Erzeugung des Aufzeichnungsmediums (5) angefordert worden ist.

15. Aufzeichnungsmedium nach einem der Ansprüche 10 bis 14, wobei die Adresseninformation für eine Server-Verbindung und die Annehmerinformation für eine bestimmte Druckbestellung erneuerbar sind.

16. Aufzeichnungsmedium-Bereitstellungsverfahren zum Bereitstellen eines Aufzeichnungsmediums, auf dem digitale Bilddaten aufgezeichnet worden sind;
wobei wenigstens eines der durch Entwickeln eines fotografischen Films vor einer Entwicklung (21) und Ausführen einer fotoelektrischen Umwandlung des Bilds nach einer Entwicklung erhaltenen digitalen Bilddaten, der durch Ausführen einer fotoelektrischen Umwandlung des fotografischen Films nach einer Entwicklung (22) oder eines Bilds eines Bilddrucks (23) erhaltenen digitalen Bilddaten und der auf einem anderen Aufzeichnungsmedium (24) aufgezeichneten digitalen Bilddaten auf einem einzigen Aufzeichnungsmedium (5) aufgezeichnet wird; und
ein Schritt zum Aufzeichnen von Verbindungs-Adressendaten zu einem mit einem Netzwerk (1) verbundenen Bestellungs-Empfangsserver (2-1; 2-2), Annehmerinformation für eine bestimmte Druckbestellung und Daten zum Veranlassen, dass die Endgeräteeinheit (4) sich über das Netzwerk (1) mit dem Bestellungs-Empfangsserver (2-1; 2-2) verbindet, wenn das Aufzeichnungsmedium (5) an der Endgeräteeinheit (4) angebracht ist, und die Annehmerinformation für eine bestimmte Druckbestellung und wenigstens einen Teil der digitalen Bilddaten zu dem Bestellungs-Empfangsserver (2-1; 2-2) sendet, enthalten ist.

17. Aufzeichnungsmedium-Bereitstellungsverfahren nach Anspruch 16, wobei der Bestellungs-Empfangsserver (2-1; 2-2) ein WWW-Server ist.

18. Aufzeichnungsmedium-Bereitstellungsverfahren nach Anspruch 17, wobei die Adresseninformation für eine Server-Verbindung und die Annehmerinformation für eine bestimmte Druckbestellung als URL-Daten zum Spezifizieren einer für jeden Empfänger der Bestellung erzeugten WWW-Seite auf dem Aufzeichnungsmedium (5) aufgezeichnet werden.

19. Aufzeichnungsmedium-Bereitstellungsverfahren nach einem der Ansprüche 16 bis 18, wobei die Annehmerinformation für eine bestimmte Druckbestellung Daten sind, die einen Lieferer spezifizieren, zu dem eine Lieferung bzw. Bereitstellung des Aufzeichnungsmediums (5) angefordert worden ist.

## Revendications

1. Système de commande d'impression d'image, comprenant :
un serveur de réception de commande (2-1 ; 2-2) qui est connecté audit réseau (1) ; et
une unité terminale (4) connectable audit réseau (1), sur laquelle un support d'enregistrement (5) peut être installé ; **caractérisée en ce que** :
ledit support d'enregistrement (5) stocke des données d'image numériques, des informations d'adresse de connexion à un serveur, et des informations d'acceptant de commande d'impression désigné ;
ladite unité terminale (4) a des moyens de connexion et des moyens de transmission, qui permettent à ladite unité terminale (4), lorsque ledit support d'enregistrement (5) est installé sur l'unité terminale (4), de se connecter audit serveur de réception de commande (2-1 ; 2-2) sur la base desdites informations d'adresse de connexion à un serveur, et de transmettre audit serveur de réception de commande (2-1 ; 2-2) lesdites informations d'acceptant de commande d'impression désigné et au moins une partie desdites données d'image numériques ; et
ledit serveur de réception de commande (2-1 ; 2-2) a des moyens de sortie de données, qui permettent audit serveur de réception de commande (2-1 ; 2-2) de sortir des données de commande d'impression sur la base des données d'image numériques reçues, et de sortir des données de commande par lesquelles un acceptant d'une commande conformément auxdites informations d'acceptant de commande d'impression désigné peut recevoir une impression d'image qui est imprimée sur la base desdites données de commande d'impression.

2. Système de commande d'impression d'image selon la revendication 1, dans lequel ledit serveur de réception de commande (2-1 ; 2-2) est un serveur WWW.

3. Système de commande d'impression d'image selon la revendication 2, dans lequel ledit support d'enregistrement (5) stocke lesdites informations d'adresse de connexion à un serveur et lesdites informations d'acceptant de commande d'impression désigné en tant que données URL pour spécifier une page WWW créée pour chaque récepteur de la commande ; et
lesdits moyens de transmission permettent à ladite unité terminale (4), après l'acquisition des données de la page WWW pour chacun des récepteurs spécifiés de la commande, de transmettre lesdites données d'image numériques audit serveur WWW.

4. Système de commande d'impression d'image selon la revendication 3, dans lequel les données de la page WWW pour chacun desdits récepteurs spécifiés de la commande incluent des données pour acquérir des données d'une page WWW d'un récepteur autre que le récepteur de la commande selon lesdites informations d'acceptant de commande d'impression désigné.

5. Système de commande d'impression d'image selon la revendication 3, dans lequel lesdits moyens de connexion permettent à ladite unité terminale (4), lorsque le récepteur de la commande selon lesdites informations d'acceptant de commande d'impression désigné ne peut pas recevoir la commande, d'obtenir une page WWW d'un récepteur substitutif de la commande ou une page WWW incluant des données de récepteur pouvant recevoir la commande.

6. Système de commande d'impression d'image selon l'une quelconque des revendications 1 à 5, dans lequel lesdits moyens de sortie de données permettent audit serveur de réception de commande (2-1 ; 2-2), lorsque le récepteur de la commande selon lesdites informations d'acceptant de commande d'impression désigné ne peut pas recevoir la commande, ou par la sélection d'un demandeur de commande, de sortir des données de commande pour permettre qu'un récepteur, autre que le récepteur de la commande selon lesdites informations d'acceptant de commande d'impression désigné, reçoive ladite impression d'image.

7. Système de commande d'impression d'image selon l'une quelconque des revendications 1 à 6, dans lequel lesdites informations d'adresse de connexion à un serveur et lesdites informations d'acceptant de commande d'impression désigné sont enregistrées lorsque les données d'image numériques sont enregistrées sur ledit support d'enregistrement (5).

8. Système de commande d'impression d'image selon l'une quelconque des revendications 1 à 7, dans lequel lesdites informations d'acceptant de commande d'impression désigné sont des données qui spécifient un récepteur de demande auquel la création dudit support d'enregistrement (5) a été demandée.

9. Système de commande d'impression d'image selon l'une quelconque des revendications 1 à 8, dans lequel lesdites informations d'adresse de connexion à un serveur et lesdites informations d'acceptant de commande d'impression désigné sont renouvelables.

10. Support d'enregistrement sur lequel des données d'image numériques ont été enregistrées, qui peut être installé sur une unité terminale (4) connectable à un réseau (1), et qui stocke à l'intérieur des données d'adresse de connexion à un serveur de réception de commande connecté audit réseau (1), des informations d'acceptant de commande d'impression désigné, et des données pour amener ladite unité terminale (4) à se connecter audit serveur de réception de commande (2-1 ; 2-2) par l'intermédiaire dudit réseau (1) lorsque le support d'enregistrement (5) est installé sur ladite unité terminale (4) et à transmettre lesdites informations d'acceptant de commande d'impression désigné et au moins une partie desdites données d'image numériques audit serveur de réception de commande (2-1 ; 2-2).

11. Support d'enregistrement selon la revendication 10, dans lequel ledit serveur de réception de commande (2-1 ; 2-2) est un serveur WWW.

12. Support d'enregistrement selon la revendication 11, dans lequel lesdites informations d'adresse de connexion à un serveur et lesdites informations d'acceptant de commande d'impression désigné sont des données URL pour spécifier une page WWW créée pour chaque récepteur de la commande.

13. Support d'enregistrement selon l'une quelconque des revendications 10 à 12, dans lequel lesdites informations d'adresse de connexion à un serveur et lesdites informations d'acceptant de commande d'impression désigné sont enregistrées lorsque les données d'image numériques sont enregistrées sur ledit support d'enregistrement (5).

14. Support d'enregistrement selon l'une quelconque des revendications 10 à 13, dans lequel lesdites informations d'acceptant de commande d'impression désigné sont des données qui spécifient un récepteur de demande auquel la création dudit support d'enregistrement (5) a été demandée.

15. Support d'enregistrement selon l'une quelconque des revendications 10 à 14, dans lequel lesdites informations d'adresse de connexion à un serveur et lesdites informations d'acceptant de commande d'impression désigné sont renouvelables.

16. Procédé de fourniture de support d'enregistrement pour fournir un support d'enregistrement sur lequel des données d'image numériques ont été enregistrées ;
dans lequel au moins une desdites données d'image numériques est obtenue en développant un film photographique avant développement (21) et en effectuant une conversion photoélectrique de l'image après développement, des données d'image numériques obtenues en effectuant une conversion photoélectrique du film photographique après développement (22) ou une image d'une impression d'image (23), et des données d'image numériques enregistrées sur d'autres supports d'enregistrement (24) sont enregistrées sur un seul support d'enregistrement (5) ; et
une étape est incluse consistant à enregistrer des données d'adresse de connexion à un serveur de réception de commande (2-1 ; 2-2) connecté à un réseau (1), des informations d'acceptant de commande d'impression désigné, et des données pour amener une unité terminale (4) à se connecter audit serveur de réception de commande (2-1 ; 2-2) par l'intermédiaire dudit réseau (1) lorsque le support d'enregistrement (5) est installé sur l'unité terminale (4) et à transmettre lesdites informations d'acceptant de commande d'impression désigné et au moins une partie desdites données d'image numériques audit serveur de réception de commande (2-1 ; 2-2).

17. Procédé de fourniture de support d'enregistrement selon la revendication 16, dans lequel ledit serveur de réception de commande (2-1 ; 2-2) est un serveur WWW.

18. Procédé de fourniture de support d'enregistrement selon la revendication 17, dans lequel lesdites informations d'adresse de connexion à un serveur et lesdites informations d'acceptant de commande d'impression désigné sont enregistrées sur ledit support d'enregistrement (5) en tant que données URL pour spécifier une page WWW créée pour chaque récepteur.

19. Procédé de fourniture de support d'enregistrement selon l'une quelconque des revendications 16 à 18, dans lequel lesdites informations d'acceptant de commande d'impression désigné sont des données qui spécifient un fournisseur auquel la fourniture dudit support d'enregistrement (5) a été demandée.
